# FASCICULE DE BREVET EUROPEEN

(11) **EP 0 650 045 B1**
(45) Date de publication et mention de la délivrance du brevet: **09.12.1998**
(21) Numéro de dépôt: 94402346.4
(22) Date de dépôt: 19.10.1994
(51) Int. Cl.: G01N 21/91, G01N 27/84

(54) **Procédé et dispositif pour caractériser optimiser et contrôler automatiquement une méthode d'analyse par ressuage**
Prozess und Gerät zur Charakterisierung, Optimierung und automatischer Kontrolle einer Analyse mittels Farbeindringverfahren
Procedure and device for characterizing, optimizing and automatically controlling a sweating analysis method

(30) Priorité: 20.10.1993 FR 9312486
(43) Date de publication de la demande: 26.04.1995
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Gillard, Hervé Paul Rolland, F-91170 Viry Chatillon (FR); Prejean-Lefevre, Véronique Hélène Marie Pierre, F-92330 Sceaux (FR)

(56) Documents cités:
- EP-A- 0 184 972
- EP-A- 0 231 004
- EP-A- 0 282 627
- EP-A- 0 309 758
- DE-A- 3 907 732
- US-A- 3 791 198
- US-A- 5 115 136
- MATERIALPRüFUNG, vol.30, no.4, Avril 1988 pages 109 - 113 M. STADTHAUS ET AL.

## Description

L'invention concerne un procédé et un dispositif pour optimiser, caractériser et contrôler une méthode d'analyse par ressuage.

L'invention s'applique à la détection des défauts de surface sur tous types de pièces par la méthode dite de ressuage, et plus particulièrement à l'automatisation, à la caractérisation et à l'optimisation des méthodes de ressuage.

Dans les procédés connus d'examen par ressuage, la pièce à examiner est préalablement préparée de façon à matérialiser les défauts de surface. La préparation consiste à appliquer à la surface de la pièce une composition pénétrante (appelée aussi produit indicateur) qui contient un colorant fluorescent ou coloré et qui pénètre dans les ouvertures des défauts débouchant à la surface de la pièce, puis à enlever de la surface de cette pièce l'excès de la composition pénétrante avant d'appliquer une composition de développement. La composition de développement joue le rôle d'un buvard et provoque l'attraction, par action capillaire hors des défauts de la surface, de la composition pénétrante liquide contenant le colorant fluorescent. La pièce est ensuite exposée à des conditions appropriées d'éclairage comme une lumière invisible génératrice d'une fluorescence, et l'existence des défauts débouchants est révélé par l'émission d'une lumière fluorescente visible par le colorant de la composition pénétrante qui a été retenu dans les criques ou fissures, après que la composition pénétrante ait été enlevée de la surface de la pièce. Généralement, la composition pénétrante comporte des pigments fluorescents qui, sous l'action d'une lumière se situant dans la gamme des ultraviolets, réémettent une lumière visible se situant le plus souvent dans la gamme des couleurs vert-jaune. Dans ce cas, la méthode est appelée méthode de ressuage fluorescent.

Ces méthodes de visualisation des défauts permettent de procéder commodément à un examen visuel des pièces par des agents contrôleurs. Cette appréciation visuelle est un travail délicat avec une grande fatigue pour les yeux du personnel de contrôle, notamment dans le cas du contrôle de pièces de grande série, ce qui a des répercussions sur la concentration. Par ailleurs, il est difficile d'éliminer les influences subjectives lors de l'appréciation visuelle.

Il a déjà également été proposé de procéder à un examen automatique des indications données par les méthodes de ressuage. A cet effet, pour la saisie et l'appréciation automatique des indications de défauts, il est connu d'utiliser des appareillages travaillant de façon optoélectronique et comportant des moyens pour éclairer un champ d'image dans lequel est placée la pièce à contrôler, des moyens vidéo par exemple une caméra permettant d'obtenir des images numériques de la pièce et des moyens de traitement d'images, par exemple un calculateur, permettant de détecter d'éventuels défauts à la surface de la pièce à contrôler par comparaison avec des images de pièces témoins.

Cependant les méthodes automatiques connues présentent généralement une sensibilité et un pouvoir de discrimination limités dus à plusieurs facteurs et notamment aux conditions d'éclairage de la pièce à contrôler et aux conditions de préparation de la pièce avant de procéder au contrôle.

Dans le cas des méthodes de ressuage fluorescent, l'éclairage est réalisé au moyen d'une source lumineuse émettant un rayonnement ultraviolet. En sortie de la source lumineuse, le rayonnement est filtré au moyen de filtres pour sélectionner une gamme de longueurs d'onde appropriée à la composition pénétrante choisie. Des filtres sont également disposés en entrée de la caméra pour éliminer les radiations parasites ne provenant pas de la composition pénétrante. L'utilisation de ces filtres n'est pas complètement satisfaisante car ils consomment de l'énergie et contribuent à l'encombrement du dispositif de contrôle automatique. En outre, les filtres n'ont pas une bande passante adaptée à ce type d'application et il est notamment très difficile d'éliminer les largeurs d'onde parasites autour de 400 nanomètres. Ces longueurs d'onde situées à la limite du visible ont généralement une énergie très importante ; elles polluent les images en provoquant des reflets et influent sur la fiabilité du résultat du contrôle en masquant l'information de fissure et en induisant des indications parasites appelées défauts fantômes.

Par ailleurs, les méthodes automatiques connues procèdent généralement par comparaison avec des images ou des pièces de référence et ne donnent que des résultats qualitatifs qui sont plus ou moins fiables car ils dépendent de nombreux paramètres déterminés de façon empirique par l'utilisateur.

Notamment, la fiabilité du contrôle de la pièce dépend du procédé de préparation précédant l'examen de la pièce et en particulier du choix de la composition pénétrante et des conditions de nettoyage de la pièce pour l'élimination de l'excès de la composition pénétrante ; la fiabilité du résultat dépend aussi de la caméra et du traitement des images acquises par les moyens vidéo.

La présente invention a pour but de pallier les inconvénients des méthodes connues d'analyse par ressuage et en particulier des méthodes d'analyse par ressuage fluorescent, et d'augmenter la fiabilité du contrôle de pièces par ces méthodes.

A cet effet, l'invention a pour objet un procédé et un dispositif automatique qui permet de caractériser quantitativement les méthodes connues d'analyse par ressuage, de comparer ces méthodes entre elles, d'optimiser les différents paramètres qui influent sur la fiabilité du résultat obtenu et de contrôler périodiquement la méthode d'analyse préalablement optimisée pour s'assurer qu'il n'y a pas de dérives importantes dans la méthode.

Selon l'invention, la caractérisation quantitative d'une méthode d'analyse par ressuage consiste à déterminer la sensibilité de détection et le bruit de fond engendrés par la méthode d'analyse au moyen d'un traitement d'images acquises à partir d'un ou plusieurs échantillons témoins préparés suivant cette méthode et soumis à des conditions d'éclairage appropriées et optimisées.

L'optimisation de la méthode d'analyse par ressuage est effectuée en recherchant quels sont les paramètres influents et en recherchant la valeur de ces paramètres qui permet de maximiser la sensibilité de détection et de minimiser le bruit de fond.

Le contrôle de la méthode d'analyse préalablement optimisée est effectuée à partir des mêmes échantillons témoins, en vérifiant périodiquement que la sensibilité de détection et le bruit de fond ne se sont pas détériorés. Dans le cas contraire un signal d'alarme signale le dysfonctionnement et la cause de ce dysfonctionnement est recherchée.

Le dispositif automatique comporte un dispositif d'illumination adapté et optimisé pour le ressuage fluorescent, dans lequel l'éclairage de la pièce est effectué par une source de lumière à rayonnement ultraviolet, et optimisé en sélectionnant une bande de longueurs d'onde centrée sur la raie d'excitation du produit indicateur, cette bande de longueurs d'onde étant suffisamment étroite pour éliminer les longueurs d'onde émises par la source de lumière dans le spectre visible, et en particulier la longueur d'onde située dans le bleu aux environs de 400 nanomètres.

Selon l'invention, le procédé pour caractériser, optimiser et contrôler automatiquement une méthode d'analyse par ressuage est caractérisé en ce qu'il consiste :
- à choisir au moins un échantillon témoin,
- à préparer cet échantillon suivant la méthode d'analyse choisie, en utilisant un produit indicateur permettant de matérialiser des défauts de surface,
- à exposer l'échantillon témoin sous un éclairage approprié et adapté au produit indicateur choisi,
- à faire l'acquisition d'au moins une image de l'échantillon témoin,
- à traiter cette image de façon à éliminer des artefacts et à déterminer quantitativement la sensibilité de détection et le bruit de fond engendrés par la méthode d'analyse choisie, la sensibilité de détection étant obtenue à partir des dimensions et de la luminance moyenne des défauts de surface visualisés sur l'image traitée,
- à rechercher des paramètres influents et à déterminer, pour chaque paramètre influent, une valeur de ce paramètre qui permet de maximiser la sensibilité de détection et de minimiser le bruit de fond.

L'invention concerne également un dispositif automatique pour caractériser, optimiser et contrôler une méthode d'analyse par ressuage fluorescent comportant un dispositif d'illumination, un dispositif de prise de vues et un dispositif de traitement d'images, caractérisé en ce que le dispositif d'illumination comporte en série, une source de lumière à rayonnement ultraviolet, un monochromateur pour sélectionner une bande de longueur d'onde centrée autour de la longueur d'onde d'excitation du produit indicateur, un guide de lumière pour focaliser le rayonnement ultraviolet sur une zone de la pièce à contrôler.

D'autres particularités et avantages de l'invention apparaîtront clairement dans la suite de la description donnée à titre d'exemple non limitatif et faite en regard des figures annexées qui représentent :
- la figure 1, un dispositif d'acquisition et de traitement d'images, selon l'invention,
- la figure 2 un exemple de réalisation d'un dispositif d'illumination de pièces contrôlées par ressuage fluorescent, selon l'invention,
- la figure 3, les différentes étapes du procédé de traitement d'images, selon l'invention,
- la figure 4, les sous-étapes du procédé correspondant au traitement d'images pour la détermination d'un indice de sensibilité, selon l'invention,
- la figure 5, un exemple des effets de différents paramètres sur la sensibilité de détection correspondant à une méthode donnée d'analyse par ressuage fluorescent,
- la figure 6, un exemple des effets de différents paramètres sur le bruit de fond généré par une méthode donnée d'analyse par ressuage fluorescent.

Dans les procédés d'examen de pièces par ressuage, les pièces sont préparées en utilisant des produits indicateurs donnant un contraste aussi fort que possible de l'indication de fissure par rapport à la surface de la pièce. Dans le cas du ressuage fluorescent, les produits indicateurs sont des pigments fluorescents qui s'éclairent vivement sous lumière ultraviolette, le fond de la surface restant sombre. Le contraste obtenu peut être utilisé pour le contrôle automatique de la pièce en relevant la luminosité des indications fluorescentes au moyen d'un dispositif photosensible approprié et en exploitant les informations ainsi obtenues.

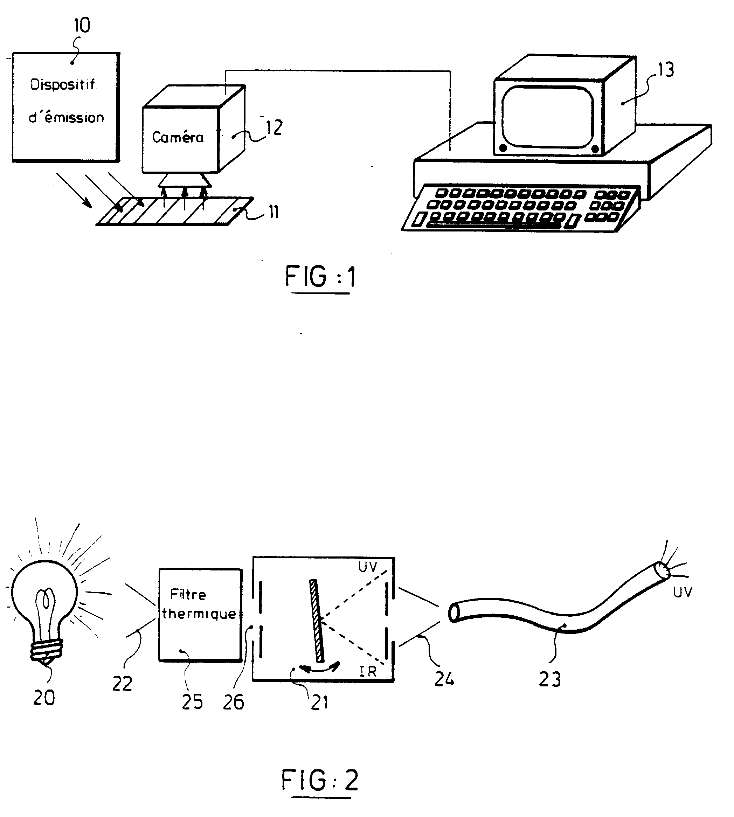

la figure 1 représente un dispositif d'acquisition et de traitement d'images, selon l'invention.

Le dispositif, comporte un dispositif d'émission de lumière 10, appelé aussi dispositif d'illumination, destiné à éclairer un champ d'image dans lequel se trouve la pièce 11 à contrôler. La pièce est ensuite optiquement détectée et électroniquement traitée par une caméra de télévision 12 très sensible à bas niveau de lumière et l'image créée est exploitée par un système de traitement d'image 13, par exemple un calculateur.

la figure 2 représente une exemple de réalisation du dispositif d'illumination de pièces contrôlées par ressuage fluorescent, selon l'invention.

Le dispositif d'illumination comporte une source de lumière 20 choisie en fonction du produit indicateur utilisé pendant le cycle de préparation de la pièce. A titre d'exemple, le produit indicateur peut être choisi tel qu'il réémet un rayonnement visible dont la longueur d'onde est située dans la gamme des couleurs jaune-vert entre 450 et 550 nanomètres sous excitation d'un rayonnement ultraviolet proche centré sur une longueur d'onde de l'ordre de 365 nanomètres. La source de lumière ultraviolette peut être un laser ou une lampe multispectrale, par exemple à vapeur de mercure. De préférence, dans le cas de l'utilisation d'une lampe, elle est choisie à puissance variable de façon à maintenir un éclairement constant. Il est également possible de régler l'éclairement en décalant le spectre de longueurs d'onde émis.

Le rayonnement émis par la source de lumière est transmis au travers d'un monochromateur 21 comportant au moins un réseau dispersif et par l'intermédiaire d'un premier dispositif optique 22 d'adaptation et de focalisation. Le signal de sortie du monochromateur 21 est dirigé au travers d'un guide de lumière 23 par l'intermédiaire d'un deuxième dispositif optique 24 d'adaptation et de focalisation.

Le rôle des dispositifs de focalisation 22 et 24 est de focaliser toute la puissance émise sur la fente d'entrée du monochromateur et à l'intérieur du guide de lumière.

Pour obtenir un fort contraste de l'indication de fissure, le monochromateur 21 est utilisé comme un filtre en émission et est choisi de façon à pouvoir répondre à deux contraintes essentielles : d'une part, la bande de longueurs d'onde sélectionnée autour de la raie d'excitation du produit indicateur, par exemple 365 nanomètres, ne doit pas être trop étroite de façon à émettre une énergie suffisante, d'autre part, il doit être suffisamment sélectif pour éliminer les longueurs d'onde émises par la source de lumière et situées dans le spectre visible, en particulier la longueur d'onde située dans le bleu aux environs de 400 nanomètres dans le cas de l'utilisation d'une lampe à vapeur de mercure. A titre d'exemple, ces deux contraintes peuvent être satisfaites par l'emploi d'un double monochromateur à faible distance focale comportant deux réseaux dispersifs accouplés mécaniquement et réglés de façon à sélectionner la même longueur d'onde. Pour que les deux réseaux ne soient pas détériorés par la puissance thermique de la lampe 20, ils peuvent être préalablement durcis chimiquement au moyen d'un traitement de surface. En outre un filtre thermique 25 peut être disposé en amont du monochromateur 21, entre le premier dispositif de focalisation 22 et l'entrée du monochromateur 26 pour limiter la puissance thermique en entrée du monochromateur.
Ce filtre thermique peut être par exemple un système à double parois en quartz séparées par une lame de vide. Le refroidissement s'effectue par convection naturelle ou par la circulation d'un fluide.

Le guide de lumière doit transmettre fidèlement le rayonnement ultraviolet en l'atténuant le moins possible et sans créer de rayonnement parasite. Un guide liquide est choisi de préférence pour ses qualités de souplesse et de robustesse, mais il est également possible d'utiliser une fibre optique, par exemple en silice, bien que ce type de fibre soit très fragile.

Le guide de lumière 23 est muni en chacune de ses extrémités d'une optique de focalisation, non représentée, par exemple des fenêtres en quartz, afin d'obtenir un éclairement homogène et focaliser le rayonnement ultraviolet sur une petite zone de la pièce, par exemple de dimension 25mm X 25mm.

La surface de la pièce est examinée successivement par petites zones en déplaçant, manuellement ou automatiquement, la pièce ou l'ensemble d'acquisition (la caméra et le dispositif d'illumination).

Pour caractériser une méthode d'analyse par ressuage fluorescent, le procédé consiste à déterminer la sensibilité de détection et le bruit de fond engendrés par cette méthode. Pour cela, la méthode d'analyse par ressuage est appliquée à un ou plusieurs échantillons témoins comportant des fissures en surface.

Pour évaluer la sensibilité de détection, il est particulièrement intéressant de choisir comme échantillons témoins, des cales étalons comportant des fissures dont la profondeur est connue et ayant un bon état de surface. A titre d'exemple, il existe dans le commerce des cales en laiton revêtues d'un dépôt de nickel-chrome d'épaisseur déterminée et comportant des fissures dont la profondeur est égale à l'épaisseur du dépôt nickel-chrome. Les cales sont disponibles pour différentes épaisseurs de dépôt nickel-chrome entre 5 et 100 micromètres. L'utilisation de ces cales comme échantillons témoins permet d'évaluer la sensibilité de détection du procédé.

Pour évaluer le bruit de fond, les échantillons témoins choisis doivent être représentatifs des pièces à contrôler en ce qui concerne le matériau et l'état de surface. Les échantillons peuvent être choisis parmi les pièces à contrôler ou des morceaux de pièces, ou peuvent être des éprouvettes représentatives du matériau et de l'état de surface des pièces à contrôler.

Chaque échantillon témoin est préalablement préparé pour matérialiser les défauts de surface au moyen d'une composition pénétrante. Il est ensuite soumis à l'action d'un rayonnement ultraviolet provenant d'un dispositif d'illumination, par exemple celui décrit en relation avec la figure 2. Le dispositif d'illumination est réglé de façon que l'intensité d'illumination soit aussi constante et homogène que possible afin d'obtenir des images de bonne qualité et comparables entre elles. Un rayonnement visible réémis par l'échantillon témoin est alors détecté et est converti en image vidéo au moyen d'une caméra vidéo pour constituer une image numérique codée avec une dynamique qui est, à titre d'exemple, de 256 niveaux de gris. De préférence la caméra est réglée de manière à obtenir un niveau de gris proche de zéro pour le fond. La sensibilité de la caméra utilisée dépend de la profondeur des criques à analyser, de la sensibilité du pénétrant utilisé et de la finesse souhaitée pour le résultat. Le grandissement de la caméra est ajusté de manière à couvrir toujours le même champ d'image ; par exemple, dans le cas des cales en laiton revêtues d'un dépôt de nickel-chrome, le grandissement de la caméra est ajusté de manière à ce que les fissures occupent la totalité de la hauteur de l'image. Les images sont intégrées toujours le même nombre de fois (par exemple 256 fois) afin de supprimer le bruit. Les images sont exploitées par un dispositif de traitement d'images pour en extraire la sensibilité de détection et le bruit de fond.

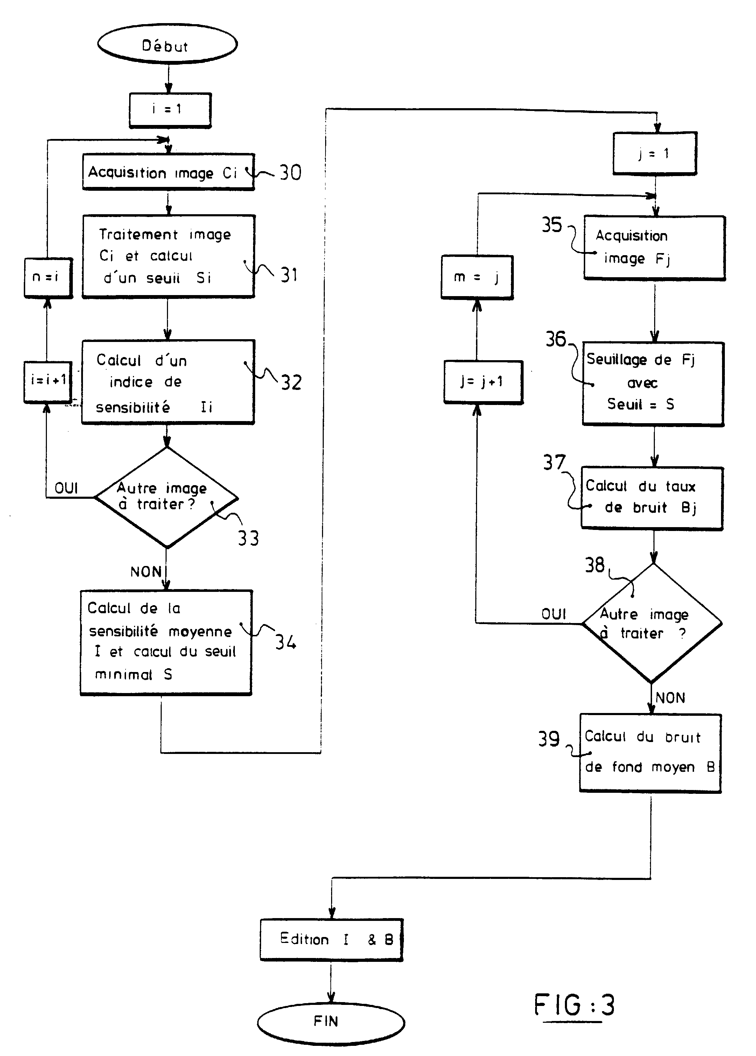

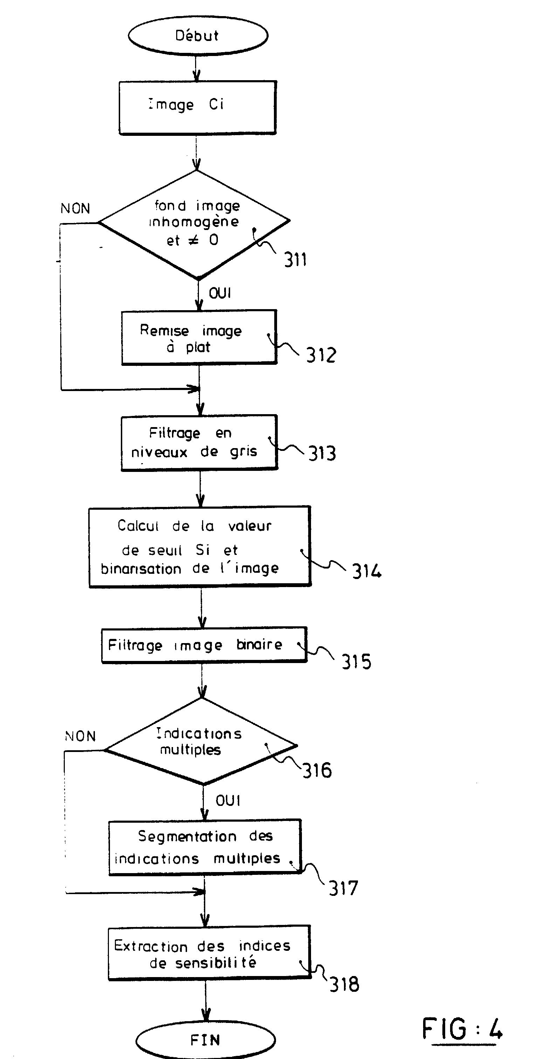

La figure 3 représente, sous la forme d'une succession de blocs fonctionnels, les différentes étapes du procédé de traitement d'images, selon l'invention.
Le procédé se déroule en deux temps.
Dans un premier temps correspondant aux étapes 30 à 34, des images Ci sont acquises, étape 30, à partir d'échantillons constitués, par exemple, de cales étalons et traitées pour en extraire d'une part, une valeur de seuil Si, étape 31, qui permet de binariser l'image afin d'en éliminer les artefacts et d'autre part, un indice de sensibilité Ii, étape 32. Le détail du traitement effectué sur ces échantillons est décrit en liaison avec la figure 4. L'étape 33 est un test permettant de déterminer si il y a d'autres images Ci à traiter. Si le test est positif, l'indice d'itération i et le nombre n d'images traitées sont incrémentés et les étapes 30 à 32 sont de nouveau effectuées avec l'image suivante. Si le test est négatif, la moyenne I des indices de sensibilité Ii obtenus pour chaque image Ci, ainsi que la valeur de seuil minimal S, sont calculées dans l'étape 34.

Dans un deuxième temps, correspondant aux étapes 35 à 39, des images Fj sont acquises, étape 35, à partir d'échantillons constitués de pièces ou d'éprouvettes représentatives de pièces à contrôler et traitées pour en extraire le taux de bruit Bj, étape 37, après seuillage, étape 36, la valeur de seuil étant la valeur de seuil minimale S obtenue lors de la détermination de l'indice de sensibilité moyen I. L'étape 38 est un test permettant de déterminer si il y a d'autres images Fj à traiter. Si le test est positif, l'indice d'itération j et le nombre m d'images traitées sont incrémentés et les étapes 35 à 38 sont de nouveau effectuées avec l'image suivante. Si le test est négatif, la moyenne B des taux de bruit Bj obtenus pour chaque image Fj est calculée dans une étape 39 et le procédé est terminé. Les valeurs I et B constituent respectivement la sensibilité de détection et le bruit de fond générés par la méthode d'analyse de ressuage considérée.

La figure 4 représente, sous la forme de blocs fonctionnels, les sous-étapes du procédé correspondant au traitement des images Ci pour la détermination d'un indice de sensibilité, selon l'invention. Pour que les images soient comparables entre elles, il est nécessaire que le fond soit homogène et prenne approximativement la même valeur pour toutes les images Ci.
La première étape 311, du traitement consiste pour chaque image, à vérifier si le fond de l'image est homogène et correspond à un niveau de gris donné, par exemple proche de zéro à 5 niveaux de gris près. Si le fond n'est pas homogène et/ou voisin de zéro, dans une étape 312 est effectuée une remise à plat de l'image qui consiste à éliminer les indications du fond. Cette opération peut être effectuée par différentes méthodes tel que, par exemple, par l'acquisition d'une image à blanc et soustraction de cette image à l'image Ci.
Il est également possible d'éliminer les indications du fond soit en corrigeant l'image par rapport à elle-même au moyen de filtrages morphologiques ou de filtrages fréquentiels, soit en corrigeant l'image par rapport à une image de référence.
Lorsque le fond est homogène, dans une étape 313, est effectué un filtrage de l'image en niveaux de gris. Ce filtrage permet de réunir des indications discontinues qui correspondent à une seule fissure. Pour être réunies les indications discontinues doivent être suffisamment proches pour apparaître continues à l'oeil nu. Le filtrage peut être effectué en utilisant des filtres de morphologie mathématique ou des filtres fréquentiels.
Dans l'étape 314 est effectué le calcul de la valeur de seuil Si qui permet de binariser l'image afin d'en éliminer les artefacts. La valeur de seuil est choisie égale à deux fois la valeur de luminance moyenne des maxima de luminance.

Le facteur deux correspond à une évaluation à mi-hauteur de la pertinence d'un pic de luminance. Les maxima de luminance sont obtenus après avoir effectué des opérations de binarisation de l'image avec une valeur de seuil approximative obtenue à partir de l'histogramme de l'image et choisie égale à la somme de la valeur moyenne et de l'écart type des luminances de l'image, de squelettisation de l'image binarisée, et de multiplication de l'image binaire squelettisée par l'image en niveaux de gris.

l'image est alors binarisée à cette valeur de seuil pour éliminer tous les points de l'image dont la valeur de luminance est inférieure à cette valeur de seuil. Un deuxième filtrage est effectué, dans l'étape 315, sur l'image binaire afin d'éliminer les petits artefacts qui n'ont pas été supprimés dans l'étape 313 lors du filtrage de l'image en niveaux de gris. Ce deuxième filtrage comporte des opérations de dilatation linéaire et d'érosion linéaire.

L'étape 316 suivante consiste à effectuer un test de recherche des indications multiples permettant de détecter les cas où deux fissures très rapprochées se sont rejointes pour n'en former qu'une seule. pour cela, l'image binaire filtrée est squelettisée afin de rechercher les points triples qui ont trois voisins. Si le test est positif il est procédé à la segmentation des indications multiples dans l'étape 317.
La segmentation consiste à séparer des indications de fissure qui ont fusionné. Les points triples étant généralement éloignés des points situés aux extrémités, la segmentation est effectuée après avoir recherché des points extrémités et avoir fait un test de proximité entre les points triples et les points extrémités.

Lorsque toutes les indications multiples ont été séparées il est procédé dans une étape 318 au calcul des différents paramètres permettant de déterminer un indice de sensibilité. L'indice de sensibilité est par exemple choisi égal au produit de l'indice de longueur par l'indice de résolution. L'indice de longueur étant égal au rapport de la longueur lue sur la longueur théorique des indications, l'indice de résolution étant égal au rapport de la luminance moyenne des maxima de luminance sur la largeur lue des indications.

La longueur théorique d'une fissure est connue et correspond à la hauteur de l'image lorsque les échantillons sont positionnés de façon que les fissures apparaissent verticales sur l'image. Le nombre de fissure sur un échantillon donné est déterminé par observation préalable de l'échantillon sous binoculaire. La largeur des indications est obtenue en calculant le rapport entre la surface occupée par les points dont la luminance est supérieure à la première valeur de seuil et la longueur lue des indications.

La sensibilité de détection et le bruit de fond générés par une méthode donnée d'analyse, par ressuage fluorescent ainsi déterminés par le procédé selon l'invention, permettent de caractériser quantitativement cette méthode.

En outre le procédé selon l'invention permet d'optimiser les paramètres influents en recherchant les valeurs de ces paramètres qui permet de maximiser la sensibilité de détection et de minimiser le bruit de fond. L'optimisation d'une méthode d'analyse donnée, consiste donc à sélectionner les paramètres influents, à chercher les valeurs de ces paramètres qui permettent de maximiser la sensibilité de détection et de vérifier si ces valeurs de paramètres ne dégradent pas le bruit de fond.

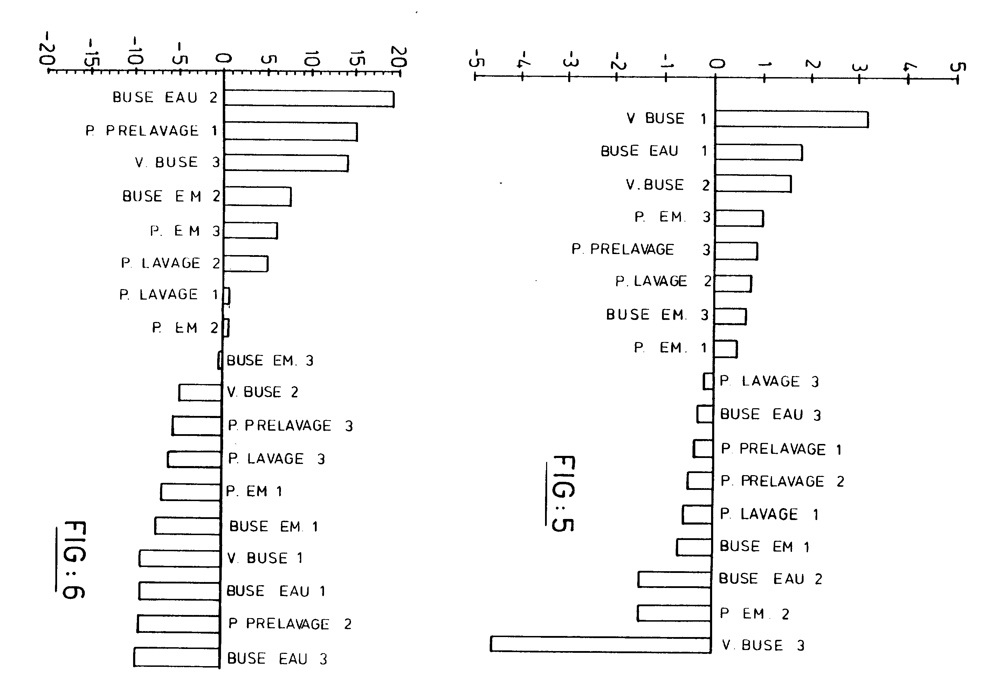

La figure 5 représente, pour une méthode donnée d'analyse par ressuage fluorescent, un exemple des effets de différents paramètres sur la sensibilité de détection. Les résultats ont été obtenus à partir de cales étalons. Sur cette figure 5, l'évolution de la sensibilité est visualisée par six paramètres différents chacun de ces paramètres prenant trois valeurs différentes numérotées de 1 à 3.

Les six paramètres sont :
- la vitesse de passage de la buse (V BUSE) pour le lavage des pièces par rapport au nombre de passages de la buse sur les pièces à laver. Trois vitesses de buse différentes sont envisagées, Le nombre de passages de la buse étant d'autant plus important que la vitesse de la buse est importante de façon à garder un rapport constant.
   Sur la figure 5, la vitesse N° 1 est inférieure à la vitesse N°2, elle-même inférieure à la vitesse N° 3.
- le type de buse à eau (BUSE EAU) utilisée pour le lavage de la pièce
- la pression de l'émulsifiant (P.EM) appliqué sur les pièces
- la pression de l'eau pour le prélavage (P. PRELAVAGE) des pièces
- la pression de l'eau pour le lavage (P. LAVAGE) des pièces
- le type de buse (BUSE EM) utilisé pour l'application de l'émulsifiant sur les pièces.

Sur la figure 5 les effets de chaque paramètre sur la sensibilité de détection sont mesurés par rapport à la valeur moyenne prise par chacun des paramètres, les paramètres étant rangés dans un ordre permettant de visualiser les valeurs les plus favorables pour l'optimisation de la sensibilité de détection. Notamment la sensibilité de détection est meilleure lorsque la vitesse de la buse de lavage est faible, lorsque la buse de lavage utilisée est la buse numéro 1 et que la pression de l'eau pour le prélavage et le lavage des pièces correspond à la troisième valeur considérée.

La figure 6 représente un exemple des effets de différents paramètres sur le bruit de fond généré par une méthode donnée d'analyse par ressuage fluorescent.

La méthode d'analyse et les paramètres considérés sont les mêmes que pour la figure 5. Les résultats ont été obtenus à partir d'une éprouvette représentative des pièces à contrôler.

Les effets de chaque paramètre sur le bruit de fond sont mesurés par rapport à la valeur moyenne prise par chacun des paramètres.

Ainsi, par exemple, cette figure 6 permet de vérifier que le choix d'une vitesse de buse de lavage permet non seulement de maximiser la sensibilité mais aussi de minimiser le bruit de fond. Par conséquent, cette valeur de paramètre permet d'optimiser la méthode d'analyse choisie.

Enfin, lorsque la méthode d'analyse est caractérisée et optimisée, le procédé, selon l'invention, peut également être utilisé pour contrôler périodiquement que la méthode d'analyse n'a pas dérivé. Pour cela, périodiquement, les valeurs de la sensibilité de détection et du bruit de fond engendrées par la méthode d'analyse sont vérifiées à partir des mêmes échantillons témoins que ceux qui ont été utilisés pour la caractérisation de la méthode d'analyse. Si les résultats se sont détérioriés, les causes du dysfonctionnement de la méthode d'analyse sont recherchées afin d'y remédier.

La présente invention n'est pas limitée à l'exemple de réalisation précisément décrit. Notamment le procédé de traitement d'images pour la détermination de la sensibilité de détection et du bruit de fond n'est pas limité au ressuage fluorescent mais peut s'appliquer à toute méthode d'analyse par ressuage.

## Revendications

1. Procédé pour caractériser, optimiser et contrôler automatiquement une méthode d'analyse par ressuage caractérisé en ce qu'il consiste :
- à choisir au moins un échantillon témoin,
- à préparer cet échantillon suivant la méthode d'analyse choisie, en utilisant un produit indicateur permettant de matérialiser des défauts de surface,
- à exposer l'échantillon témoin sous un éclairage approprié et adapté au produit indicateur choisi,
- à faire l'acquisition d'au moins une image de l'échantillon témoin,
- à traiter cette image de façon à éliminer des artefacts et à déterminer quantitativement la sensibilité de détection et le bruit de fond engendrés par la méthode d'analyse choisie, la sensibilité de détection étant obtenue à partir des dimensions et de la luminance moyenne des défauts de surface visualisés sur l'image traitée,
- à rechercher des paramètres influents et à déterminer, pour chaque paramètre influent, une valeur de ce paramètre qui permet de maximiser la sensibilité de détection et de minimiser le bruit de fond.

2. Procédé selon la revendication 1, caractérisé en ce que le traitement d'images pour la détermination de la sensibilité de détection consiste pour chaque image acquise à :
- corriger l'image (311, 312) pour obtenir un fond homogène ayant un niveau de gris de valeur prédéterminée,
- filtrer l'image (313) en niveau de gris de façon à réunir des indications discontinues qui correspondent à une seule fissure,
- calculer une valeur de seuil et binariser l'image (314) à cette valeur de seuil pour ne conserver que des points de l'image qui sont susceptibles de correspondre à un défaut de la pièce,
- filtrer l'image binaire (315) pour éliminer des points images qui n'appartiennent pas à des défauts et qui n'ont pas été éliminés par le filtrage de l'image en niveau de gris,
- rechercher des indications multiples (316) pour détecter des défauts rapprochés qui ont fusionné,
- séparer les indications (317) de défauts qui ont fusionné,
- extraire un indice de sensibilité (318)

3. Procédé selon la revendication 2, caractérisé en ce que la sensibilité de détection de la méthode d'analyse est égale à la valeur moyenne des indices de sensibilité extraits de chacune des images acquises.

4. Procédé selon la revendication 2, caractérisé en ce que le traitement d'images pour la détermination du bruit de fond consiste pour chaque image acquise, à effectuer un seuillage (36) de l'image avec la plus faible valeur de seuil obtenue pour la détermination de la sensibilité avant d'extraire un taux de bruit de fond (37).

5. Procédé selon la revendication 4, caractérisé en ce que le bruit de fond engendré par la méthode d'analyse est égal à la valeur moyenne des taux de bruit de fond obtenus pour chacune des images acquises.

6. Procédé selon la revendication 3, caractérisé en ce que pour la détermination de la sensibilité de détection, l'échantillon témoin est une cale étalon comportant des fissures dont la profondeur est connue.

7. Procédé selon la revendication 5, caractérisé en ce que pour la détermination du bruit de fond, l'échantillon témoin est une pièce réalisée dans un matériau identique aux pièces à contrôler et ayant un état de surface représentatif des pièces à contrôler.

8. Dispositif pour la mise en oeuvre du procédé selon l'une des revendications 1 à 7 pour caractériser, optimiser et contrôler automatiquement une méthode d'analyse par ressuage fluorescent selon laquelle des pièces à contrôler comportent des défauts de surface matérialisés en utilisant un produit indicateur émettant un rayonnement visible sous un éclairage centré autour d'une longueur d'onde d'excitation du produit indicateur, comportant un dispositif d'illumination (10), un dispositif de prise de vues (12) et un dispositif de traitement d'images (13), caractérisé en ce que le dispositif d'illumination (10) comporte en série, une source de lumière (20) à rayonnement ultraviolet, un monochromateur (21) comportant au moins un réseau dispersif pour sélectionner une bande de longueur d'onde centrée autour de la longueur d'onde d'excitation du produit indicateur, un guide de lumière (23) pour focaliser le rayonnement ultraviolet sur une zone de la pièce à contrôler.

9. Dispositif selon la revendication 8, caractérisé en ce qu'il comporte en outre deux dispositifs d'adaptation et de focalisation (22, 24) disposés respectivement en entrée et en sortie du monochromateur.

10. Dispositif selon la revendication 9, caractérisé en ce qu'il comporte en outre un filtre thermique (25) disposé en amont du monochromateur (21).

11. Dispositif selon l'une quelconque des revendications 8 à 10, caractérisé , en ce que le monochromateur est un double monochromateur comportant deux réseaux dispersifs accouplés mécaniquement et réglés de façon à sélectionner la même longueur d'onde.

## Patentansprüche

1. Verfahren zum Charakterisieren, Optimieren und automatischen Prüfen einer Eindringanalysemethode,
**dadurch gekennzeichnet**, daß es darin besteht,
- wenigstens ein Vergleichsmuster auszuwählen,
- dieses Muster entsprechend der gewählten Analysemethode zu präparieren, indem eine Indikatorsubstanz benutzt wird, die eine Darstellung der Oberflächenfehler ermöglicht,
- das Vergleichsmuster unter einer geeigneten und an die gewählte Indikatorsubstanz angepaßten Beleuchtung zu exponieren,
- wenigstens ein Bild des Vergleichsmusters zu erfassen,
- dieses Bild so zu verarbeiten, daß Artefakte eliminiert und die Detektierungsempfindlichkeit und das Hintergrundrauschen, die durch die gewählte Analysemethode erzeugt werden, quantitativ bestimmt werden, wobei die Detektierungsempfindlichkeit aus den Abmessungen und der mittleren Luminanz der auf dem verarbeiteten Bild sichtbar gemachten Oberflächenfehler gewonnen wird,
- Einflußparameter zu ermitteln und für jeden Einflußparameter einen Wert dieses Parameters festzulegen, der es erlaubt, die Detektierungsempfindlichkeit zu maximieren und das Hintergrundrauschen zu minimieren.

2. Verfahren nach Anspruch 1,
dadurch gekennzeichnet,
daß die Bildverarbeitung zur Bestimmung der Detektierungsempfindlichkeit für jedes erfaßte Bild darin besteht,
- das Bild zu korrigieren (311, 312), um einen homogenen Hintergrund zu gewinnen, der einen Graupegel mit einem vorbestimmten Wert aufweist,
- das Bild bezüglich des Graupegels so zu filtern (313), daß diskontinuierliche Anzeigen, die einem einzigen Riß entsprechen, vereinigt werden,
- einen Schwellwert zu berechnen und das Bild mit diesem Schwellwert einer Binärumwandlung zu unterziehen (314), so daß nur solche Bildpunkt beibehalten werden, die möglicherweise einem Fehler des Werkstücks entsprechen,
- das binäre Bild zu filtern (315), um Bildpunkte zu eliminieren, die nicht zu Fehlern gehören und die nicht durch die Graupegelfilterung des Bild eliminiert wurden,
- Mehrfachanzeigen zu ermitteln (316), um nebeneinanderliegende Fehler zu detektieren, die sich vereinigt haben,
- die Anzeigen von Fehlern zu trennen (317), die sich vereinigt haben,
- einen Empfindlichkeitsindex zu extrahieren (318).

3. Verfahren nach Anspruch 2,
dadurch gekennzeichnet,
daß die Detektierungsempfindlichkeit der Analysemethode gleich dem Mittelwert der aus jedem der erfaßten Bilder extrahierten Empfindlichkeitsindizes ist.

4. Verfahren nach Anspruch 2,
dadurch gekennzeichnet,
daß die Bildverarbeitung zur Bestimmung des Hintergrundrauschens für jedes erfaßte Bild darin besteht, daß eine Schwellwertbewertung (36) des Bildes mit dem kleinsten Schwellwert durchgeführt wird, der für die Bestimmung der Empfindlichkeit gewonnen wurde, bevor eine Hintergrundrauschgröße extrahiert wird (37).

5. Verfahren nach Anspruch 4,
dadurch gekennzeichnet,
daß das durch die Analysemethode erzeugte Hintergrundrauschen gleich dem Mittelwert der Hintergrundrauschgrößen ist, die für jedes der erfaßten Bilder gewonnen wird.

6. Verfahren nach Anspruch 3,
dadurch gekennzeichnet,
daß das Vergleichmuster für die Bestimmung der Detektierungsempfindlichkeit eine Musterscheibe ist, die Risse aufweist, deren Tiefe bekannt ist.

7. Verfahren nach Anspruch 5,
dadurch gekennzeichnet,
daß das Vergleichmuster für die Bestimmung des Hintergrundrauschens ein Werkstück ist, das aus einem mit dem Material der zu prüfenden Werkstücke identischen Material hergestellt ist und einen Oberflächenzustand besitzt, der für die zu prüfenden Werkstücke repräsentativ ist.

8. Vorrichtung zur Durchführung des Verfahrens nach einem der Ansprüche 1 bis 7 zum Charakterisieren, Optimieren und automatischen Prüfen einer mit Fluoreszenz arbeitenden Eindringanalysemethode, nach welcher Oberflächenfehler der zu prüfenden Werkstücke, die durch die Benutzung einer Indikatorsubstanz dargestellt werden, die eine Strahlung emittiert, welche unter einer Beleuchtung sichtbar ist, die um die Anregungswellenlänge der Indikatorsubstanz zentriert ist, mit einer Beleuchtungsvorrichtung (10), einer Aufnahmevorrichtung (12) und einer Bildverarbeitungsvorrichtung (13),
**dadurch gekennzeichnet,**
daß die Beleuchtungsvorrichtung (10) in Serienanordnung aufweist: eine Lichtquelle (20) für ultraviolette Strahlung, einen Monochromator (21) mit wenigstens einem Zerstreuungsgitter zur Auswahl eines um die Anregungswellenlänge der Indikatorsubstanz zentrierten Wellenlängenbandes und einen Lichtwellenleiter (23) zur Fokussierung der ultravioletten Strahlung auf einer Zone des zu prüfenden Werkstücks.

9. Vorrichtung nach Anspruch 8,
dadurch gekennzeichnet,
daß sie ferner zwei Adaptierungs- und Fokussierungsvorrichtungen (22, 24) aufweist, die am Eingang bzw. am Ausgang des Monochromators angeordnet sind.

10. Vorrichtung nach Anspruch 9,
dadurch gekennzeichnet,
daß sie weiterhin ein Wärmefilter (22) aufweist, das vor dem Monochromator (21) angeordnet ist.

11. Vorrichtung nach einem der Ansprüche 8 bis 10,
dadurch gekennzeichnet,
daß der Monochromator ein Doppelmonochromator mit zwei Zerstreuungsgittern ist, die mechanisch gekoppelt sind und so geregelt werden, daß sie die gleiche Wellenlänge auswählen.

## Claims

1. A process for automatically characterising, optimising and monitoring a crack detection analysis method,,
characterised in that it consists of:
choosing at least one control specimen,
preparing the specimen according to the chosen analysis method by using an indicator product for showing up surface defects;
exposing the specimen toappropriate lighting adapted to the chosen indicator product,
obtaining at least one image of the control specimen,
processing the image to eliminate artifacts and quantitatively determine the detection sensitivity and background noise produced by the chosen analysis method, the detection sensitivity being found from the dimensions and average brightness of the surface defects displayed on the processed image, and
searching for the influencing parameters and determining for each such parameter a value which maximises detection sensitivity and minimises background noise.

2. A process according to claim 1, characterised in that the image processing for determining detection sensitivity consists for each image of:
correcting the image (311, 312) to obtain a homogeneous background having a predetermined grey level,
filtering the grey-level image (313) so as to combine intermittent indications associated with a single fissure,
calculating a threshold value and binarising the image (314) thereat in order to retain only those points of the image likely to correspond to a defect in the article,
filtering the binary image (315) in order to eliminate image points which are not associated with defects and which were not eliminated by the filtering of the grey-level image,
searching for multiple indications (316) to detect close-together defects which have merged,
separating out the indications (317) of defects which have merged, and
extracting a sensitivity index (318).

3. A process according to claim 2, characterised in that the detection sensitivity of the analysis method is equal to the average value of the sensitivity indices extracted from each of the obtained images.

4. A process according to claim 2, characterised in that the image processing for determining background noise consists for each obtained image of effecting a thresholding (36) of the image which had the lowest threshold value obtained for sensitivity determination before extracting a background noise level (37).

5. A process according to claim 4, characterised in that the background noise caused by the analysis method is equal to the average value of the background noise levels obtained for each of the obtained images.

6. A process according to claim 3, characterised in that to determine detection sensitivity the control specimen is a standard block with fissures of known depth.

7. A process according to claim 5, characterised in that to determine background noise the control specimen is an article made of a material identical to the material of the articles to be inspected and having a surface state representative of the latter articles.

8. An apparatus for carrying out a process according to any of claims 1 to 7 for automatically characterising, optimising and controlling a fluorescent crack detection analysis method wherein articles to be inspected have surface defects which are made apparent by using an indicator product emitting visible radiation in light centred around a wavelength exciting the indicator product, comprising lighting means (10, camera means (12) and image-processing means (13),
characterised in that the lighting means (10) comprise in series a source (20) of ultraviolet light, a monochromator (21) comprising at least one dispersion network for selecting a bandwidth of a wavelength centred around the excitation wavelength of the indicator product, and a light guide (23) for focusing the ultraviolet radiation on a zone of the article to be inspected.

9. An apparatus according to claim 8, characterised in that it also comprises two matching and focusing devices (20, 24) disposed at the entry and exit respectively of the monochromator.

10. An apparatus according to claim 9, characterised in that it also comprises a heat filter (25) disposed upstream of the monochromator (21).

11. An apparatus according to any of claims 8 to 10, characterised in that the monochromator is a double monochromator comprising two mechanically interconnected dispersion networks adjusted to select the same wavelength.
